# EUROPÄISCHE PATENTSCHRIFT

(11) **EP 1 857 800 B1**
(45) Veröffentlichungstag und Bekanntmachung des Hinweises auf die Patenterteilung: **25.02.2009**
(21) Anmeldenummer: 07017655.7
(22) Anmeldetag: 18.07.2001
(51) Int. Cl.: G01L 19/00, G01L 19/04, G01L 9/00

(54) **Druckmessverfahren mit einem Temperatursensor**
Pressure measurement cell with temperature sensors and method for measuring pressure
Cellule de mesure de la pression avec des capteurs de temperature et procédé de mesure de la pression

(30) Priorität: 07.09.2000 DE 10044078
(43) Veröffentlichungstag der Anmeldung: 21.11.2007
(62) Teilanmeldung aus: 01117319.2
(73) Patentinhaber: VEGA Grieshaber KG, 77709 Wolfach (DE)
(72) Erfinder: Jacob, Jörn, 77709 Wolfach-Kirnbach (DE); Böhler, Ewald, 77709 Wolfach (DE)
(74) Vertreter: Göhring, Robert

(56) Entgegenhaltungen:
- US-A- 5 383 367
- US-A- 5 394 345

## Beschreibung

Die vorliegende Erfindung betrifft ein Verfahren zur Druckmessung mit einem Temperatursensor. Temperatursensoren sind häufig in Druckmesszellen integriert, um den statischen Temperaturfehler bei der Druckmessung zu kompensieren. Bei keramischen Druckmesszellen ist dieser Temperatursensor meistens auf der Rückseite der Keramik appliziert, er kann aber auch in einer anschließenden Auswerteelektronik enthalten sein.

Druckmesszellen sind z.B. in DE 41 11 118 A1 und EP 0 764 839 A1 beschrieben.

Wenn sich die Druckmesszelle in thermischem Gleichgewicht mit ihrer Umgebung befindet, kann die Temperaturabhängigkeit der Druckmessung mit Hilfe eines solchen Temperatursensors und einer geeigneten Nachbereitung des Messsignals gut kompensiert werden.

Verfahren zur Kompensation von Temperaturdifferenzen in einer Druckmesszelle und zur Korrektur der Messungen einer Druckmesszelle gegenüber dem Einfluss transienter Temperaturen sind bspw. aus der US 5,383,367 bzw. der US 5,394,345 bekannt.

Schnelle Änderungen der Temperatur können jedoch zu erheblichen Messfehlern führen, die mit den bekannten Verfahren nicht sinnvoll kompensierbar sind. Dieses Problem kann bei Druckmesszellen diverser Bauarten auftreten, ist aber besonders schwerwiegend bei keramischen Messzellen mit flacher Membran.

Um dieses Problem zu lösen dient ein Messverfahren mit den Merkmalen des Anspruchs 1.

Es ist bekannt, bei einer Druckmesszelle mit einem Grundkörper und einer an dem Grundkörper angeordneten, durch einen zu messenden Druck verformbaren Membran zwei Temperatursensoren in Richtung eines erwarteten Temperaturgradienten beabstandet anzuordnen.

In den meisten Fällen, in denen die Druckmesszelle einem thermischen Ungleichgewicht ausgesetzt ist, ist mit einem Temperaturunterschied zwischen einem auf die Membran der Messzelle einwirkenden Medium und der von dem Medium abgewandten, mit der Umgebung thermisch verbundenen Rückseite der Druckmesszelle d.h. einem Temperaturgradienten von der Vorder- zur Rückseite der Druckmesszelle zu rechnen. Deshalb ist der erste Temperatursensor vorzugsweise an der die Vorderseite der Druckmesszelle bildenden Membran, wo er Temperaturänderungen des Mediums schnell zu folgen vermag, und der zweite an der von der Membran abgewandten Rückseite des Grundkörpers der Druckmesszelle angeordnet.

Diesem Vorschlag liegt die Erkenntnis zugrunde, dass die durch Temperaturänderungen hervorgerufenen Verfälschungen des Druckmesswerts zurückzuführen sind auf durch einen Temperaturgradienten verursachte innere Verformungen der Messzelle. Wenn nämlich die Membran der Messzelle einem plötzlich erwärmten Medium ausgesetzt ist, vermag sie dieser Temperaturänderung wesentlich schneller zu folgen als der Grundkörper der Messzelle, der von der Membran durch einen Zwischenraum oder eine Kammer beabstandet und somit gegen das Fluid thermisch isoliert ist. Gleichzeitig hindert eine steife Verbindung zwischen Membran und Grundkörper die Membran daran, sich frei auszudehnen, so dass die thermische Ausdehnung die Membran dazu zwingt, sich zu krümmen. Diese Krümmung -zum Grundkörper hin oder von ihm fort- bewirkt die Verfälschung der Druckmessung. Durch Erfassen eines Temperaturgradienten ist es erfindungsgemäß möglich, zu erkennen, wann die Gefahr einer messwertverfälschenden Krümmung der Membran gegeben ist und, wenn eine solche Gefahr besteht, die Messwerte der Druckmesszelle zu ignorieren oder unter Berücksichtigung der Membranverkrümmung zu kompensieren.

Ein typischer Abstand zwischen dem ersten Temperatursensor und einer dem zu messenden Druck ausgesetzten Außenfläche der Membran kann je nach Dicke der Membran, d.h. je nach Dimensionierung der Druckmesszelle bzw. der durch sie zu messenden Drucke, zwischen 0,1 und 3 mm betragen.

Um eine effiziente Wärmeübertragung zwischen dem Medium und dem ersten Temperatursensor zu gewährleisten, ist dieser vorteilhafterweise in eine den Grundkörper und die Membran verbindende Materialschicht eingebettet.

Insbesondere ist er vorteilhafterweise in eine Dichtung eingebettet, die eine zwischen dem Grundkörper und der Membran gebildete Kammer verschließt.

Bei einer Druckmesszelle, deren Grundkörper und/oder Membran aus einem Keramikmaterial bestehen, ist eine solche Dichtung vorteilhafterweise aus einem Glas gebildet.

Zweckmäßigerweise umfassen die Temperatursensoren jeweils ein Widerstandselement mit temperaturabhängigem Widerstand. Ein solches Widerstandselement kann auf einfache Weise flächig, mit einer geringen Ausdehnung in Richtung des erwarteten Temperaturgradienten, erzeugt werden.

Um ein möglichst großes und rauscharmes Temperaturmesssignal zu erhalten, ist es zweckmäßig, dass das Widerstandselement des ersten Temperatursensors sich über im wesentlichen den gesamten Umfang der Messzelle erstreckt. Ein Nebeneffekt dieser Anordnung des Widerstandselements ist, dass der aus dem Widerstandswert des Widerstandselements bestimmbare Temperaturwert einen Mittelwert über im wesentlichen den gesamten Umfang der Membran darstellt und somit einen Mittelwert über die gesamte Fläche der Membran sehr nahe kommt.

Um auf einer gegebenen Umfangslänge der Dichtung eine große Leiterlänge des Widerstandselements unterzubringen, ist das Widerstandselement vorzugsweise mäanderartig ausgebildet.

Weitere Merkmale und Vorteile der Erfindung ergeben sich aus der nachfolgenden Beschreibung eines Ausführungsbeispiels mit Bezug auf die beigefügten Zeichnungen. Es zeigen:
Figur 1 eine Druckmesszelle in einem axialen Schnitt;
Figur 2 einen Schnitt durch die Druckmesszelle der Figur 1 entlang der Ebene A-A.
Figur 3 eine Draufsicht auf die Rückseite des Grundkörpers der Druckmesszelle aus Figur 1;
Figuren 4 und 5 jeweils Schnitte entlang der Ebene A-A durch Abwandlungen der Druckmesszelle aus Figur 1;
Figur 6 einen exemplarischen zeitlichen Verlauf der Messsignale der Temperatursensoren.

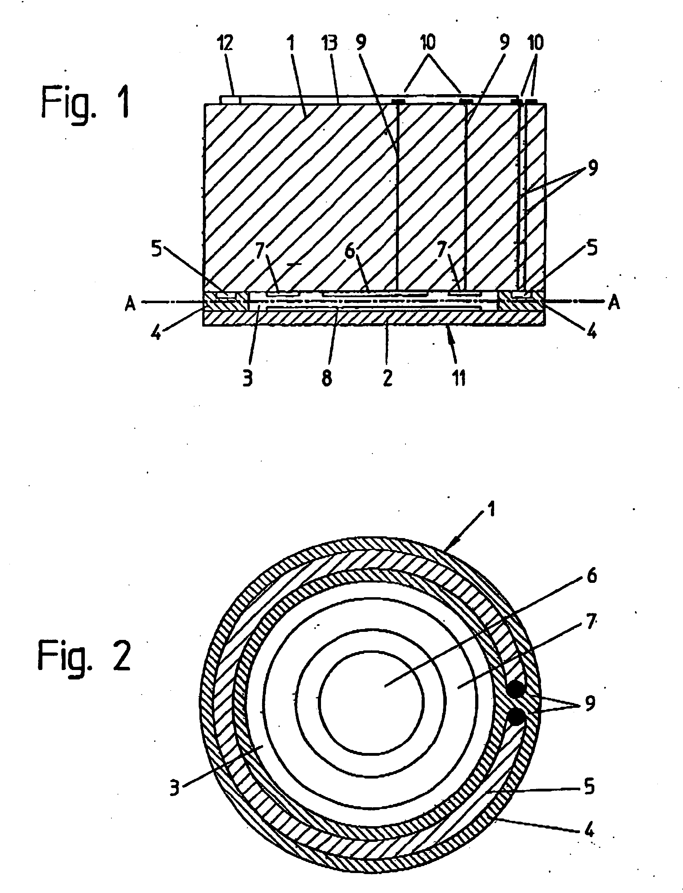

Figur 1 zeigt eine Druckmesszelle in einem ersten Schnitt. Die Druckmesszelle umfasst einen im wesentlichen zylindrischen Grundkörper 1 und eine Membran 2, jeweils aus einem Keramikmaterial, die durch eine sich ringförmig entlang der Ränder der einander zugewandten Stirnseiten von Grundkörper 1 und Membran 2 erstreckende Materialschicht 4 beabstandet gehalten sind. Die Materialschicht 4 besteht aus einem Glaswerkstoff. Sie umschließt gemeinsam mit dem Grundkörper 1 und der Membran 2 dicht eine flachzylindrische Kammer 3. Der Grundkörper 1 trägt im Bereich der Kammer 3 an seiner Stirnfläche eine zentral angeordnete Elektrode 6 und eine sich konzentrisch dazu erstreckende Ringelektrode 7. Durchkontaktierungen 9 verbinden die zwei Elektroden mit Anschlussfeldern 10 an der Rückseite des Grundkörpers 1. An der gegenüberliegenden Seite der Kammer 3 trägt die Membran 2 eine kontaktierte Gegenelektrode 4. Die Membran 2 ist durch den Druck eines auf ihre Außenfläche 11 wirkenden Mediums verformbar. Die Verformung der Membran verändert die Kapazität des von den Elektroden 6, 7, 8 gebildeten Kondensators. Diese Kapazität oder eine von ihr abgeleitete Größe kann als das nicht temperaturkompensierte Druckmesssignal der Messzelle aufgefasst werden. Eine solche abgeleitete Größe kann z.B. die Resonanzfrequenz eines Schwingkreises sein, der die Druckmesszelle als Kondensator enthält.

Ein erster Temperatursensor ist durch ein Widerstandselement 5 mit temperaturabhängigem Widerstandswert gebildet, das in die als Dichtung für die Kammer 3 fungierende Materialschicht 4 eingebettet ist. Zwei entgegengesetzte Enden des langgestreckten Widerstandselements 5 sind über Durchkontaktierungen 9 mit Anschlussfeldern 10 an der Rückseite des Grundkörpers 1 verbunden.

Bei dem in Figur 1 gezeigten Ausführungsbeispiel befindet sich das Widerstandselement 5 in direktem Kontakt mit der Oberfläche des Grundkörpers 1 und ist von der Membran 2 durch einen Teil der Materialschicht 4 getrennt. Die direkte Anbringung des Widerstandselements 5 auf dem Grundkörper 1 erleichtert die Herstellung einer elektrischen Verbindung zwischen dem Widerstandselement und der Umgebung über die Durchkontaktierungen 9. Die vom Grundkörper 1 abgewandte Oberfläche des Widerstandselements 5 bildet eine große Wärmeaustauschfläche mit der Materialschicht 4 und über diese mit der Membran 2 und dem (nicht dargestellten) Medium, das den zu messenden Druck auf die Membran 2 ausübt.

Ein zweiter Temperatursensor ist durch ein Widerstandselement 12 mit temperaturabhängigem Widerstandswert gebildet, das auf der von der Membran 2 abgewandten Rückseite 13 des Grundkörpers 1 angebracht ist. Das Widerstandselement 12 kann zum Schutz vor Beschädigung mit einer in der Figur nicht dargestellten Schutzschicht überzogen sein, die die gleiche Zusammensetzung wie die Materialschicht 4 haben kann.

Figur 2 zeigt anhand eines Schnitts entlang der Ebene A-A von Figur 1 genauer das als erster Temperatursensor fungierende temperaturabhängige Widerstandselement 5.

Man erkennt in Figur 2 in der Draufsicht die Zentralelektrode 6 und die Ringelektrode 7 des Grundkörpers 1 sowie, konzentrisch dazu am Rand des Grundkörpers 1 angeordnet, die Materialschicht 4. Im Innern der Materialschicht 4 verläuft das temperaturabhängige Widerstandselement 5 über fast den gesamten Umfang des Grundkörpers 1, mit Ausnahme des Abstandes zwischen den zwei Durchkontaktierungen 9, die zur Versorgung des Widerstandselements 5 mit einem Messstrom dienen.

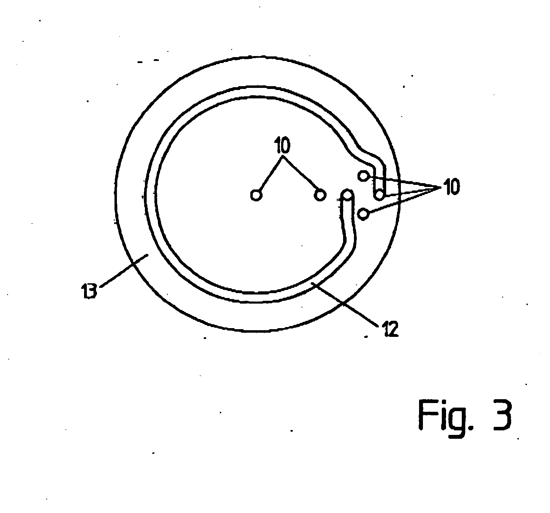

Figur 3 zeigt eine Draufsicht auf die Rückseite 13 des Grundkörpers 1. Das als zweite Temperatursensor fungierende Widerstandselement 12 erstreckt sich im wesentlichen der gleichen Form wie das Widerstandselement 5 zwischen zwei Anschlussfeldern 10 über praktisch den gesamten Umfang des Grundkörpers.

Die Druckmesszelle kann auf einfache Weise hergestellt werden, indem auf dem Grundkörper 1 zunächst in einer Dickschicht- oder Dünnschichttechnik das temperaturabhängige Widerstandselement 5 ausgebildet wird, auf diesem dann ein Vorläufermaterial für die Materialschicht 4 aufgetragen und auf dem Vorläufermaterial die Membran 2 angeordnet wird. Durch Erhitzen und Verglasen des Vorläufermaterials kommt die dadurch gebildete glasartige Materialschicht 4 in einen innigen Kontakt mit dem Grundkörper 1 und dem Widerstandselement 5 einerseits und der Membran 2 andererseits, was zum einen die Dichtigkeit der Kammer 2 gegen das Medium, dessen Druck gemessen werden soll, gewährleistet, und zum anderen einen hocheffizienten Wärmeaustausch von der mit dem Medium in Kontakt befindlichen Membran 2 über die Materialschicht 4 mit dem widerstandselement 5 ermöglicht. Die Herstellung des Widerstandselements 12 kann in gleicher Weise erfolgen

Je nach vorgesehenem Messbereich der Druckmesszelle bzw. der erforderlichen Festigkeit der Membran 2 beträgt der Abstand zwischen der Außenfläche 11 der Membran und dem Widerstandselement 5 typischerweise 0,1 bis 3, vorzugsweise 0,2 bis 2 mm.

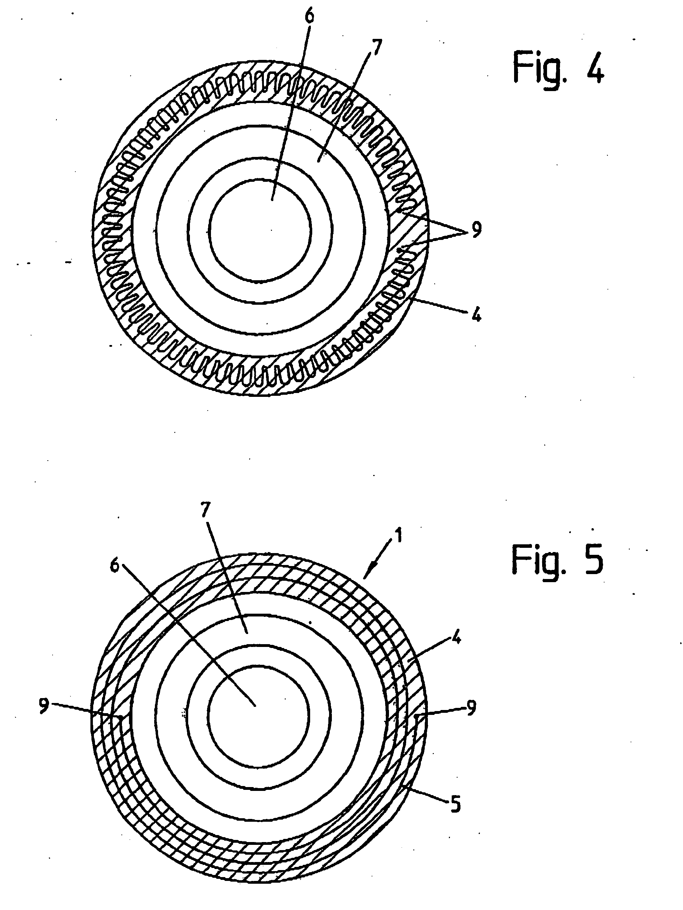

Die Figuren 4 und 5 zeigen jeweils anhand von Schnitten entlang der Ebene A-A von Figur 1 abgewandelte Ausgestaltungen des als erster Temperatursensor fungierenden temperaturabhängigen Widerstandselements 5, wobei sich versteht, dass entsprechende Ausgestaltungen auch für das zweite Widerstandselement 12 in Betracht kommen.

Bei der in Figur 4 dargestellten Ausgestaltung der Druckmesszelle verläuft das temperaturabhängige Widerstandselement 5 auf einem mäanderartigen oder zickzackförmigen Weg um im wesentlichen den gesamten Umfang des Grundkörpers 1 von einer der zwei Durchkontaktierungen 9 zur anderen. Diese Ausgestaltung erlaubt es; ein Widerstandselement 5 unterzubringen, dessen ausgestreckte Länge wesentlich größer ist als die Umfangslänge des Grundkörpers, das einen hohen Widerstandswert und eine dementsprechend starke Änderung des Widerstandswertes mit der Temperatur aufweist.

Bei der Ausgestaltung der Figur 5 verläuft das temperaturabhängige Widerstandselement 5 auf einem spiralartigen Weg innerhalb der Materialschicht 4. Auch bei dieser Anordnung kann die ausgestreckte Länge des Widerstandselements 5 ein Vielfaches der Umfangslänge des Grundkörpers 1 erreichen. Die Besonderheit dieser Ausgestaltung ist, dass sie eine weitgehend willkürliche Positionierung der Durchkontaktierungen 9 am Grundkörper 1 zulässt, z.B. an diametral gegenüberliegenden Positionen wie in Figur 4 gezeigt, weil die Länge, die das Widerstandselement 5 erreichen kann, hier nicht proportional zum Winkelabstand der zwei Durchkontaktierungen 9 ist.

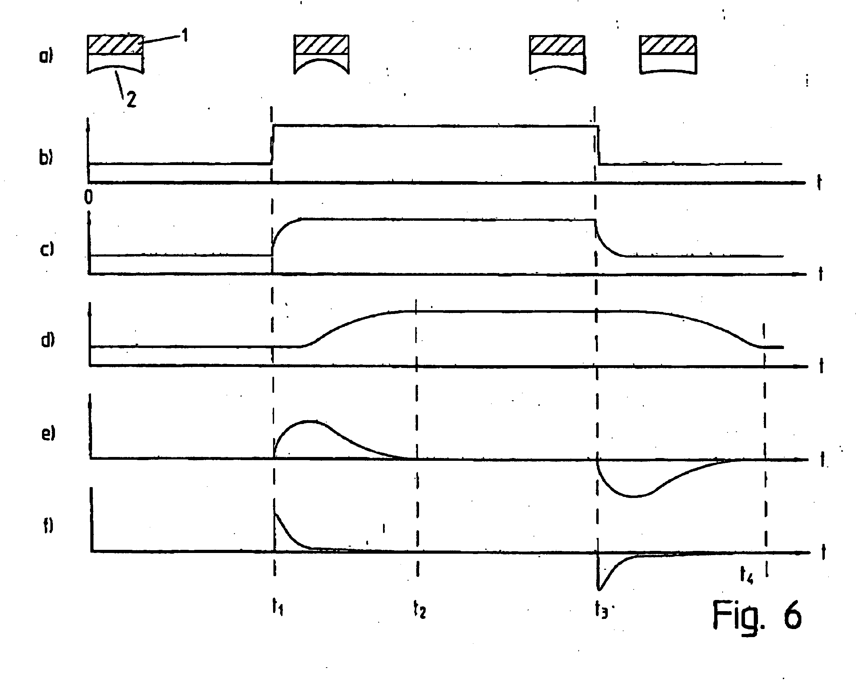

Figur 6 veranschaulicht anhand eines Zeitdiagramms die erfindungsgemäße Funktionsweise des Temperatursensors, wenn er einem Medium mit wechselnder Temperatur ausgesetzt ist. Dabei zeigt die Zeile b den zeitlichen Verlauf der Temperatur des Mediums. In einem Zeitintervall von 0 bis t₁ liegt diese Temperatur auf einem gleichbleibenden, niedrigen Wert. Die Druckmesszelle befindet sich in thermischem Gleichgewicht mit dem Medium; die von dem ersten Temperatursensor gemessene Temperatur, dargestellt in Zeile c, und die von dem weiter von dem Medium entfernten zweiten Temperatursensor gemessene Temperatur, dargestellt in Zeile d, sind gleich.

Die Membran 2 der Druckmesszelle weist eine mittlere Krümmung auf, dargestellt in dem ersten schematischen Querschnitt der Zeile a, die allein durch den auf die Membran wirkenden Druck des Mediums bestimmt ist.

Zum Zeitpunkt t₁ steigt die Temperatur des Mediums abrupt auf einen höheren Wert. Die Temperatur der Membran 2 folgt dieser Temperaturerhöhung schnell, da sie eine geringe Dicke aufweist, mit dem Medium auf ihrer gesamten Oberfläche in Kontakt ist und zum Grundkörper 1 hin auf dem größten Teil ihrer Fläche durch die Kammer 3 thermisch isoliert ist. Wie in Zeile d gezeigt, ist der Grundkörper 1 erst mit einer beträchtlichen Verzögerung in der Lage, der Temperaturerhöhung zu folgen, so daß der zweite Temperatursensor erst zu einem späteren Zeitpunkt t₂ eine Gleichgewichtstemperatur erreicht. Während des Zeitintervalls t₁ bis t₂ ist der Grundkörper 1 somit kälter als die Membran 2, und die thermische Ausdehnung der Membran ist größer als die des Grundkörpers. Da Grundkörper und Membran aber an ihrem Umfang steif verbunden sind, kann sich die Membran in radialer Richtung nicht weiter ausdehnen als der Grundkörper. Die Erwärmung führt deshalb zu einer verstärkten Krümmung der Membran 2, dargestellt im zweiten Schnitt der Zeile a, und damit zu einer Abstandsverringerung zwischen der Membran und dem Grundkörper, die im thermischem Gleichgewicht einem wesentlich höheren Druck entsprechen würde als dem, dem die Membran aktuell ausgesetzt ist. mit dem Druck korrelierten Membranverformung gegeben ist.

Die Auswerteschaltung kann die in Zeile f gezeigte Ableitung der vom ersten Sensor gemessenen Temperatur bilden und auswerten, ihr Verlauf ist dem der in Zeile e gezeigten Differenz ähnlich. Der hintere, zweite Temperatursensor wird in diesem Fall nur noch für eine statische Temperaturkompensation der gelieferten Druckmesswerte benötigt. Denkbar ist aber auch, den zweiten Temperatursensor gänzlich fortzulassen und zur statischen Temperaturkompensation eine vom Ausgangssignal des ersten Sensors abgeleitete Größe zu verwenden. So kann z.B. die Auswertungsschaltung durch Bilden eines gleitenden Mittelwerts des Erfassungssignals des ersten Temperatursensors (Zeile c) und zeitliches Verzögern eine Kompensationsgröße ermitteln, die den Verlauf der Temperatur an der Rückseite der Druckmesszelle, d.h. das Signal des zweiten Temperatursensors (Zeile d) gut reproduziert.

Einer einfachen Ausgestaltung zufolge kann eine solche Auswerteschaltung die von der Druckmesszelle gelieferten Druckmesswerte verwerfen, wenn die Differenz der von den zwei Temperatursensoren erfassten Temperaturen einen gegebenen Grenzbetrag überschreitet. Es ist jedoch auch möglich, anhand der Temperaturdifferenz das Ausmaß der zu erwartenden, durch das thermische Ungleichgewicht bedingten Verformung der Membran zu berechnen und den von der Druckmesszelle gelieferten Wert entsprechend dieser Verformung zu bereinigen bzw. zu kompensieren.

In der praktischen Anwendung kann zur Durchführung dieser Kompensation in der Auswerteschaltung eine Kennlinie gespeichert sein, die einen Wert der Verfälschung der Druckmessung als Funktion der Temperaturdifferenz zwischen den zwei Sensoren angibt, und die Kompensation erfolgt durch Addition oder Subtraktion dieses Wertes von dem nicht temperaturkompensierten Druckmesssignal. Auf diese Weise können auch dann brauchbare Druckmesswerte gewonnen werden, wenn sich die Druckmesszelle nicht im thermischen Gleichgewicht befindet.

Der dritte schematische Querschnitt der Zeile a zeigt die Druckmesszelle, nachdem sie das thermische Gleichgewicht bei hoher Temperatur wieder erreicht hat. Wenn Grundkörper und Membran aus dem gleichen Keramikmaterial bestehen bzw. gleiche thermische Ausdehnungskoeffizienten besitzen, ist die Krümmung der Membran 2 in diesem Zustand die gleiche, wie unter dem gleichen Druck bei niedriger Temperatur.

Zum Zeitpunkt t₃ nimmt die Temperatur des Mediums wieder abrupt ab, worauf sich die Membran 2 schneller zusammenzieht als der Grundkörper 1. Dies führt zu deren in dem vierten Schnitt der Zeile a gezeigten, im Vergleich zum thermischen Gleichgewichtszustand verringerten Krümmung der Membran 2. Der Abstand zwischen Membran 2 und Grundkörper 1 ist somit vergrößert, und der von der Druckmesszelle gelieferte unkompensierte Druckmesswert entspricht einem geringeren Druck als dem, der tatsächlich auf die Membran einwirkt. Auch diese Verfälschung kann durch eine rechnerische Korrektur auf Grundlage der Differenz der von den zwei Temperatursensoren erfassten Temperaturen korrigiert werden.

Bei der Beschreibung der Figur der Figur 6 wurde davon ausgegangen, dass die druckbeaufschlagte Membran 2 konkav gekrümmt ist, so dass eine thermische Ausdehnung der Membran einer Verringerung des Abstandes zwischen Membran und Grundkörper und damit einem scheinbar erhöhten Druck entspricht. Selbstverständlich ist die Erfindung auch anwendbar auf eine konvexe Membran, bei der eine Temperaturerhöhung zu einer Erhöhung des Abstandes vom Grundkörper 1 führen würde.

Sie ist ferner auch nicht beschränkt auf Druckmesszellen mit kapazitiver Erfassung der Verformung der Membran, sondern ist für alle Druckmesszellen mit einem beweglichen Element anwendbar, dessen Bewegung nicht nur von dem zu messenden Druck, sondern auch von Temperaturänderungen beeinflusst wird und dessen Position das nicht kompensierte Druckmesssignal bestimmt.

### Bezugszeichenliste

- 1.: Grundkörper
- 2.: Membran
- 3.: Kammer
- 4.: Dichtung
- 5.: Widerstandselement
- 6.: Zentralelektrode
- 7.: Ringelektrode
- 8.: Gegenelektrode
- 9.: Durchkontaktierung
- 10.: Anschlussfelder
- 11.: Außenfläche
- 12.: Widerstandselement
- 13.: Rückseite des Grundkörpers

## Patentansprüche

1. Verfahren zum Ermitteln des Drucks eines Fluids mit Hilfe einer Druckmesszelle, die einen Grundkörper, eine an dem Grundkörper angeordnete; durch den Druck des Fluids verformbare Membran und einen an der Membran angeordneten ersten Temperatursensor aufweist, **dadurch gekennzeichnet, dass** wenn die Änderungsgeschwindigkeit der von dem ersten Temperatursensor gemessenen Temperatur auf einen Temperaturgradienten in der Druckmesszelle hinweist, eine durch den Temperaturgradienten verursachte Verfälschung des Druckmesssignals berechnet und der von der Druckmesszelle gelieferte Druckmesswert um die berechnete Verfälschung korrigiert wird.

## Claims

1. Method for determining the pressure of a fluid by means of a pressure measurement cell, which comprises a base, a diaphragm arranged on the base, deformable through the pressure of the fluid, and a first temperature sensor arranged on the diaphragm, **characterized in that** if the change rate of the temperature measured by the first temperature sensor indicates a temperature gradient in the pressure cell, any corruption caused by the temperature of the pressure measurement signal is computed and the pressure measurement value supplied by the pressure cell is corrected by the corruption computed.

## Revendications

1. Procédé pour déterminer la pression d'un fluide à l'aide d'une cellule de mesure de pression comportant un corps de base, une membrane déformable par la pression du fluide et portée par le corps de base, ainsi qu'un premier capteur de température équipant la membrane,
**caractérisé en ce que**
si la vitesse de variation de la température mesurée par le premier capteur indique un gradient de température dans la cellule de mesure, on calcule l'erreur du signal de mesure de pression engendrée par le gradient de température et on corrige la valeur de mesure fournie par la cellule de mesure de pression selon l'erreur ainsi calculée.
